# DEMANDE DE BREVET EUROPEEN

(11) **EP 1 213 489 A1**
(43) Date de publication de la demande: **12.06.2002**
(21) Numéro de dépôt: 01403162.9
(22) Date de dépôt: 07.12.2001
(51) Int. Cl.: F16B 5/06, B60R 13/02, F16B 21/07

(54) **Fixation d'une pièce par rapport à une autre, avec positionnement dans les trois axes, notamment pour pièce d'habillage de véhicule automobile**

(30) Priorité: 11.12.2000 FR 0016078
(71) Demandeur: Renault, 92100 Boulogne Billancourt (FR)
(72) Inventeur: Leloup, Stéphane, 78330 Fontenay Le Fleury (FR); Pfirsch, Nicole, 75015 Paris (FR)

(57) **Abrégé**

Fixation d'une pièce (1) sur une autre (8), caractérisée en ce qu'elle comporte d'une part, solidaire de l'une des deux pièces, une attache (7) à ajustement selon un premier axe, l'attache portant une première surface (14) transversale à cet axe, et d'autre part, solidaire de l'autre des deux pièces, un organe (2) présentant une seconde surface (4) sensiblement parallèle à la première surface (14), les deux surfaces (14, 4) étant accrochables l'une à l'autre au moyen d'un dispositif d'accrochage (14', 4') mutuel libre selon un plan parallèle aux deux surfaces.

## Description

La présente invention concerne une fixation de positionnement d'une pièce par rapport à une autre, utilisable notamment dans l'industrie automobile.

Il est parfois nécessaire de pouvoir fixer une pièce sur une autre dans une position réelle qui peut être légèrement différente de la position théorique. Dans ce cas, il faut disposer d'organes de fixations qui acceptent ces dispersions de positionnement.

C'est par exemple le cas dans l'industrie automobile, lorsqu'il s'agit de fixer la console de levier de vitesse en partie arrière, sans modifier la géométrie, ni créer de contraintes sur la console et en absorbant des dispersions de positionnement dans les trois axes x, y et z. La position en x, y et z de la console est en fait figée par des clips utilisés en partie avant, et la position résultante en partie arrière peut varier de plusieurs millimètres autour de la position théorique. Il ne s'agit en aucun cas de rattraper les dispersions car la console doit être figée dans l'état de montage ; cette contrainte est imposée par le "design" de la pièce, pour laquelle on souhaite un parallélisme absolu entre la console et la planche. La géométrie est donc faite au niveau de la planche par l'accostage et le clipsage des deux pièces.

Différentes solutions ont été tentées pour résoudre ce problème, mais toutes présentent des inconvénients.

On a ainsi fixé la console à des supports ou pattes au moyen de vis, la console et les pattes étant équipées de molaires à trous oblongs d'ajustement, perpendiculaires l'une à l'autre. D'une part, cette solution ne résout les problèmes de dispersion que dans deux axes sur trois, mais d'autre part le vissage induit par son mode opératoire des risques de dispersions supplémentaires (l'opérateur peut prendre plus ou moins appui sur la console avant de visser et engendre des déformations de la console). De plus, la vis reste un élément visible de l'extérieur. On a aussi proposé la fixation de la console sur le support au moyen d'une agrafe à dents en sapin, au moyen d'agrafes de géométrie compliquée, au moyen de jeu de rainures et de nervures coopérant l'un avec l'autre, au moyen d'aiguilles à crans coopérant avec un nid d'abeille femelle, etc., mais aucune de ces solutions n'a résolu le problème de manière satisfaisante.

Le document US 4 270 328 montre un dispositif de fixation avec une première attache insérée avec jeu dans une tôle pour coopération avec un habillage, la première attache comportant une tige prévue pour coopérer avec un nid d'abeille d'une deuxième attache montée sur l'habillage. Un tel dispositif ne résout pas non plus le problème de manière satisfaisante, car il nécessite un montage avec jeu des attaches, ce qui provoque des risques d'imprécision de montage et des risques de bruits parasite.

Le but de l'invention est de proposer une fixation d'une pièce sur une autre acceptant bien les dispersions selon les trois axes et permettant un montage facile de la pièce sur le support.

L'invention atteint son but grâce à une fixation d'une pièce sur une autre, caractérisée en ce qu'elle comporte d'une part, solidaire de l'une des deux pièces, une attache à ajustement selon un premier axe, l'attache portant une première surface transversale à cet axe (de préférence sensiblement orthogonale à cet axe) et d'autre part, solidaire de l'autre des deux pièces, un organe présentant une seconde surface sensiblement parallèle à la première surface, les deux surfaces étant accrochables l'une à l'autre au moyen d'un dispositif d'accrochage mutuel libre selon un plan parallèle aux deux surfaces.

Ainsi, avantageusement, la fixation comporte, sur l'attache, des premiers moyens d'ajustement en position de l'attache par rapport à l'une des deux pièces selon le premier axe et, solidaire de l'autre des deux pièces, sur l'organe, des seconds moyens d'ajustement en position par rapport à ladite attache selon deux autres axes perpendiculaires au premier axe.

Par attache à ajustement selon un axe, on entend un système qui permet un coulissement axial d'un organe par rapport à un autre, avec blocage dans la position atteinte, au moins dans la direction du retour, et notamment une attache de type à dents en sapin, dans laquelle une tige à dents peut avancer par crans dans une douille pourvue d'une ou plusieurs languettes ou reliefs coopérant avec les dents pour permettre l'avancée dans un sens mais pas le recul. Par dispositif d'accrochage libre selon un plan, on entend un dispositif qui permet d'accrocher deux surfaces en vis-à-vis dans n'importe quelle position voisine décalée dans ledit plan, notamment un système de type velours-crochet (par exemple vendu sous la marque Velcro ®).

Avantageusement, l'attache comprend un corps recevant un clou sur la tête duquel est formée la première surface transversale, le corps étant muni de moyens de fixation rapide à sa pièce respective.

Avantageusement, la seconde surface transversale est formée sur une agrafe munie de moyens de fixation rapide à sa pièce respective.

Dans l'un et l'autre cas, il est avantageux que les moyens de fixation rapides soient de type à clef tournante et blocage axial après rotation. Mais on pourrait aussi utiliser des fixations à encliquetage ou autres.

L'invention fournit une fixation facile à mettre en oeuvre, tolérant les dispersions selon les trois axes, et dans le cas d'application à une console, invisible.

L'invention se rapporte aussi à un véhicule automobile comportant une fixation telle que définie précédemment, l'une des pièces (1) étant une console et l'autre des pièces (8) étant un support d'un tunnel du véhicule.

L'invention sera mieux comprise et d'autres avantages et caractéristiques seront mis en évidence à la lecture de la description suivante, se référant aux dessins annexés sur lesquels :
La figure 1 est une vue schématique en coupe de l'environnement de la fixation conforme à l'invention, dans le cadre d'une console automobile dont on n'a représenté que la partie arrière, la fixation étant constituée d'une agrafe de console arrière et d'une attache de console,
La figure 2 montre en perspective le détail de l'agrafe de console arrière de la figure 1,
Les figures 3 et 4 montrent respectivement en vue de côté et en perspective l'attache de console de la figure 1.

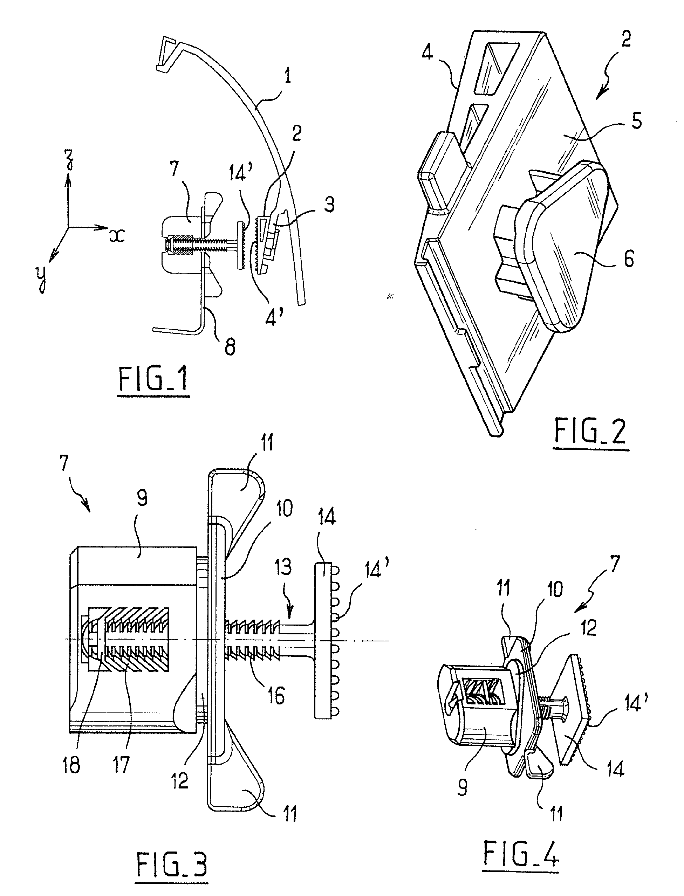

La figure 1 représente la partie arrière 1 d'une console, en particulier un habillage de console centrale d'habitacle de véhicule, dont la partie avant, non représentée et serait située sur la gauche du dessin, est fixée indépendamment par des clips. Il s'agit de fixer la partie 1 dans les trois axes x, y, z, tout en tolérant les dispersions dimensionnelles selon ces axes.

La fixation conforme à l'invention comporte un organe, en l'espèce une agrafe 2 de console arrière, livrée avec la console et fixée sur une patte inclinée 3 prévue dans la partie arrière de console. L'agrafe 2 est en forme de coin à face avant 4 et face arrière 5. La face arrière 5 porte une clé triangulaire d'accrochage 6 coopérant avec une ouverture triangulaire de la patte 3 et permettant ainsi de fixer l'agrafe à la patte 3 par rotation d'un 1/3 de tour. Quand l'agrafe 2 est fixée, la face avant 4 est sensiblement verticale. La face avant 4 est revêtue (par exemple par collage) d'un moyen d'accrochage rapide par simple accostage 4', par exemple un ruban auto-agrippant du type velours-crochet.

L'autre partie de fixation est l'attache 7 de console fixée sur la partie verticale d'une équerre de support 8, par exemple en tôle, elle-même fixée sur le tunnel du véhicule, c'est à dire sur me plancher du véhicule. L'attache 7 comporte un corps 9 à section oblongue surmonté par un plateau 10 à oreilles 11. Un bossage 12 de faible épaisseur (sensiblement l'épaisseur du support 8) est aussi de forme oblongue orientée à 45° de l'orientation oblongue du corps 9. Le support 8 comprend une ouverture appropriée à la forme du corps et du bossage 12, de sorte qu'on peut fixer l'attache 7 en passant le corps 9 dans l'ouverture et en tournant d'un 1/4 de tour, de manière à maintenir une partie des bords de l'ouverture bloqués entre le corps 9 et le plateau 10. Le corps 9 reçoit un clou 13 dont la tête 14 est en forme de plateau, sa surface arrière (dans le sens de la console) étant couverte d'un moyen d'accrochage 14' complémentaire de celui 4' qui garnit la surface 4. La tige du clou est couverte de dents en sapin 16 qui coopèrent avec des languettes inclinées 17 formée dans le corps 9 pour permettre un enfoncement par pas du clou 13 dans le corps 9. Un lien frangible 18 entre deux rainures 17 peut être prévu dans le corps 19 pour former une dureté surmontable définissant un arrêt correspondant à la position initiale de montage du clou 13 dans le corps 9.

La fixation conforme à l'invention gère la dispersion de positionnement en x grâce à l'attache 7 et la dispersion de positionnement en y et z grâce à la mise en regard des deux faces 4', 14' du moyen d'accrochage rapide velours-crochet.

Le montage de la partie arrière 1 de la console s'effectue en deux temps. D'abord la poussée de la console dans l'axe x du clou 13 lors de sa mise en place permet la solidarisation des deux parties 4', 14' de ruban à velours et crochet. Ensuite la poussée de la console jusqu'à sa butée lors du clipsage à l'avant permet au clou 13, prémaintenu par l'arrêt frangible, de s'enfoncer dans le corps 9 de l'attache 7 jusqu'au positionnement en x correct résultant. Un jeu subsiste logiquement entre la tête 14 du clou 13 et le plateau 10 du corps 9. Les deux poussées sont effectuées dans le même mouvement et intégrées à la cinématique de montage : la fixation ne nécessite aucun geste spécifique.

## Revendications

1. Fixation d'une pièce (1) sur une autre (8), **caractérisée en ce qu'**elle comporte d'une part, solidaire de l'une des deux pièces, une attache (7) à ajustement selon un premier axe, l'attache portant une première surface (14) transversale à cet axe, et d'autre part, solidaire de l'autre des deux pièces, un organe (2) présentant une seconde surface (4) sensiblement parallèle à la première surface (14), les deux surfaces (14, 4) étant accrochables l'une à l'autre au moyen d'un dispositif d'accrochage (14', 4') mutuel libre selon un plan parallèle aux deux surfaces.

2. Fixation selon la revendication 1, **caractérisée en ce qu'**elle comporte, sur l'attache (7), des premiers moyens d'ajustement en position de l'attache (7) par rapport à l'une des deux pièces (1, 8) selon le premier axe et, solidaire de l'autre des deux pièces (1, 8), sur l'organe (2), des seconds moyens d'ajustement en position par rapport à ladite attache (7) selon deux autres axes perpendiculaires au premier axe.

3. Fixation selon l'une quelconque des revendications 1 ou 2, **caractérisée en ce que** l'attache (7) est une attache de type à dents (16) en sapin.

4. Fixation selon l'une quelconque des revendications 1 à 3, **caractérisée en ce que** le dispositif d'accrochage libre (14', 4') est un système de type velours-crochet.

5. Fixation selon l'une quelconque des revendications 1 à 4, **caractérisée en ce que** l'attache (7) comprend un corps (9) recevant un clou (13) sur la tête duquel est formée la première surface transversale (14), le corps (9) étant muni de moyens de fixation rapidc à la pièce.

6. Fixation selon l'une quelconque des revendications 1 à 5, **caractérisée en ce que** la seconde surface transversale est formée sur une agrafe (2) munie de moyens (6) de fixation rapide à la pièce.

7. Fixation selon l'une quelconque des revendications 5 ou 6, **caractérisée en ce que** les moyens (6) de fixation rapide sont de type à clef tournante et blocage axial après rotation.

8. Véhicule automobile **caractérisé en ce qu'**il comporte une fixation selon l'une quelconque des revendications précédentes, l'une des pièces (1) étant une console et l'autre des pièces (8) étant un support d'un tunnel du véhicule.
